# FASCICULE DE BREVET EUROPEEN

(11) **EP 0 827 881 B1**
(45) Date de publication et mention de la délivrance du brevet: **05.07.2006**
(21) Numéro de dépôt: 97401837.6
(22) Date de dépôt: 31.07.1997
(51) Int. Cl.: B60R 21/20, B32B 17/10

(54) **Protection es cas de choc latéral pour occupant de véhicules**
Seitenaufprallschutz für Fahrzeuginsassen
Vehicle passenger side impact protection

(30) Priorité: 13.08.1996 DE 19632616
(43) Date de publication de la demande: 11.03.1998
(73) Titulaire: SAINT-GOBAIN GLASS FRANCE, 92400 Courbevoie (FR)
(72) Inventeur: Jourdaine, Loic, 60190 Hemevillers (FR); Krämling, Franz, 52072 Aachen (DE); Immerschitt, Stefan, 52134 Herzogenrath (DE)
(74) Mandataire: Le Cam, Stéphane Georges Elie

(56) Documents cités:
- EP-A- 0 590 845
- EP-A- 0 723 893
- WO-A-91/19586
- DE-A- 4 226 757
- US-A- 3 388 034
- US-A- 5 227 241

## Description

La présente invention concerne un dispositif de protection en cas de choc latéral pour occupant de véhicules, comportant un sac gonflable dit "Air Bag" disposé dans la paroi latérale du véhicule.

Dans le cas des dispositifs de protection connus de ce type, l'Air Bag est toujours disposé de telle manière qu'il prenne appui à l'état activé contre un élément de la carrosserie, afin qu'il puisse remplir sa fonction de protection. L'agencement de l'Air Bag, de telle sorte qu'il prenne appui contre une glace latérale, est en règle générale évité. On part généralement du fait que les glaces latérales lors d'une collision du véhicule se brisent et libèrent de ce fait l'entièreté de l'ouverture de fenêtre, puisqu'elles sont normalement faites de verre de sécurité à une seule feuille, qui se fragmente en petits morceaux en cas de rupture. Une protection suffisante en cas de choc latéral n'est pas atteinte dans le cas des dispositifs de protection connus.

De tels dispositifs, correspondant au préambule de la revendication 1, sont connus par exemple de la demande de brevet européen N° EP 590 845.

L'invention a pour but de concevoir un dispositif de protection en cas de choc latéral comportant un Air Bag de telle manière qu'une protection suffisante soit assurée également dans la zone de la surface de la fenêtre.

Ce but est atteint grâce au dispositif selon la revendication 1.

Selon l'invention, l'Air Bag est disposé à côté d'une fenêtre de telle manière qu'il se déploie à l'état activé dans la direction de la surface de la fenêtre, et la glace est un vitrage feuilleté comportant au moins une feuille de verre 16, 17 et une couche 18.

Plus particulièrement, l'invention se caractérise par une résistance à la rupture en flexion du vitrage feuilleté 1 5 accrue par le fait que :
a) la couche 18 est constituée d'un stratifié composé d'une couche d'âme en polymère résistant aux chocs, tel que du PET, et de deux couches de colle thermoplastiques, en polyvinylbutyral ou en polyuréthane, disposées sur les deux faces de la couche de PET, ou bien que
b) la couche 18 est en une matière plastique ayant un module d'Young au moins égal à 20 MPa.

L'agencement suivant l'invention tire profit du fait que les vitrages feuilletés d'une résistance à la rupture en flexion accrue présentent une solidité accrue et résistent aussi dans le cas d'un impact latéral à des contraintes supérieures. Même lorsqu'ils se brisent, ils ne se fragmentent pas en petits morceaux comme les vitrages de sécurité habituels à feuille unique, mais se brisent en grands fragments, qui sont maintenus ensemble par la pellicule intercalaire de sorte que le risque de la destruction de l'Air Bag par les arêtes vives des fragments est inexistant. Ils représentent par conséquent un appui suffisant pour l'Air Bag non seulement lorsqu'ils sont intacts, mais aussi après une rupture du vitrage feuilleté, de sorte que celui-ci peut complètement remplir sa fonction de protection.

Dans le cas où la couche 18 est un stratifié, la ou les feuilles de verre 16, 1 7 partiellement trempées présentent chacune, de préférence, une épaisseur de 1,5 à 2,5 mm et des précontraintes de pression dans les couches superficielles de 25 à 100 MN/m².

Selon les modes de réalisation avantageux de l'invention, lorsque la couche 18 est en une matière plastique ayant un module d'Young au moins égal à 20 MPa :
◆ le vitrage 15 a une épaisseur totale inférieure à 15 mm, un rapport de l'épaisseur de la couche 18 à l'épaisseur de chaque feuille de verre 16, 17 compris entre 1 et 10 et un module d'Young supérieur à 30 GPa pour une épaisseur totale de vitrage de 3 mm ;
◆ ladite matière plastique comprend pour une proportion prépondérante au moins l'un des constituants choisis parmi une résine ionomère, telle qu'un copolymère d'éthylène et d'acide (méth)acrylique neutralisé par une polyamine, un polyuréthane, un polyuréthane thermoplastique, un poly(téréphtalate d'éthylène), un polyester ou une résine acrylique éventuellement modifiée ;
◆ l'adhésion entre verre et matière plastique est telle que la résistance à l'arrachement est au moins de 20 N/cm pour une bande de 1 cm de large, un promoteur d'adhérence étant, si nécessaire, déposé sur le verre ou introduit dans la matière plastique pour atteindre la valeur voulue ;
◆ chaque feuille de verre 16, 17 a une épaisseur comprise entre 0,5 et 1,5 mm et la couche 18 une épaisseur comprise entre 2 et 10 mm.

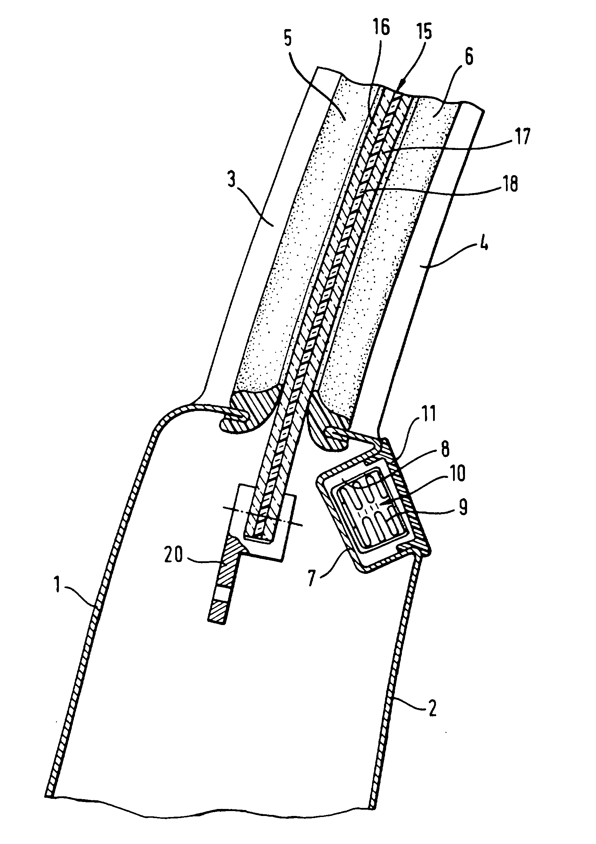

L'invention sera décrite plus en détail sur la base du dessin, qui représente selon une vue en coupe verticale la zone médiane d'une portière de véhicule comportant une glace de portière pouvant être abaissée.

La construction de portière comporte la paroi extérieure 1 et la paroi intérieure 2, qui forment le puits de portière, ainsi que le cadre de fenêtre 3, 4, à l'intérieur duquel la glace pouvant être abaissée 15 est montée à coulissement entre des profilés d'étanchéité 5, 6.

Dans la partie supérieure de la paroi intérieure 2, juste en dessous de l'ouverture de fenêtre, la paroi intérieure présente une cavité 7. Cette cavité 7 forme une chambre 8, dans laquelle est agencée une cassette 10 contenant un Air Bag 9. La cassette 10 contient de plus les dispositifs nécessaires à un gonflage brusque de l'Air Bag en cas d'activation par les détecteurs de collision prévus dans le véhicule. La chambre 8 est fermée par rapport à l'habitacle par un couvercle 11, qui se détache de son ancrage lors de l'activation de l'Air Bag. Lors de l'activation de l'Air Bag, celui-ci se déploie obliquement vers le haut dans la direction de la tête et de l'épaule du conducteur ou du passager et prend appui dans ce cas contre la glace 15.

La glace 15 est un vitrage feuilleté et est constituée de deux feuilles de verre 16 et 17, qui sont unies l'une à l'autre via une couche intermédiaire thermoplastique 18. La couche intermédiaire thermoplastique 18 peut être une couche homogène et être constituée par exemple de polyvinylbutyral ou de polyuréthane, comme c'est habituellement le cas pour les vitrages feuilletés de sécurité pour automobiles.

Un vitrage feuilleté, dans lequel la couche intermédiaire 18 est constituée d'un stratifié composé de deux pellicules de colle thermoplastiques, en particulier en polyvinylbutyral ou en polyuréthane, et d'une pellicule en polymère résistant aux chocs, par exemple en polyéthylène téréphtalate (PET), disposée entre ces deux pellicules de colle, présente une solidité particulièrement élevée même à l'état brisé. La pellicule en PET peut pour sa part être pourvue d'un revêtement transparent réfléchissant le rayonnement infrarouge.

Les deux feuilles de verre 16 et 17 présentent, comparativement à du verre flotté refroidi normalement, une résistance à la rupture en flexion accrue qui est obtenue par le fait que ces feuilles de verre sont partiellement trempées, après le bombage, par refroidissement brusque. Une résistance à la rupture en flexion suffisante du vitrage feuilleté est atteinte lorsque les deux feuilles de verre 16, 17 présentent chacune une épaisseur de 1,5 à 2,5 mm et sont chacune refroidies à une vitesse de refroidissement telle que la précontrainte de compression dans les couches superficielles des feuilles de verre sont de 25 à 100 MN/m².

Au niveau du bord inférieur du vitrage feuilleté 15 est comme d'habitude fixé de manière appropriée un élément de fixation et de transfert de force 20, qu'attaquent des dispositifs non représentés dans ce cas-ci à l'aide desquels la glace 1 5 est déplacée vers le bas et vers le haut.

## Revendications

1. Dispositif de protection en cas de choc latéral pour occupants de véhicules, comportant un Air Bag (9) disposé dans la paroi latérale du véhicule, à côté d'une fenêtre de telle manière qu'il se déploie à l'état activé dans la direction s'étendant entre la tête de l'occupant et la surface de la fenêtre ayant une glace latérale, **caractérisé en ce que** la glace (15) est un vitrage feuilleté comportant au moins deux feuilles de verre (16, 17) dont une au moins est partiellement trempée par refroidissement brusque et une couche intermédiaire (18), **et en ce que** le vitrage feuilleté (15) présente une résistance à la rupture en flexion accrue par le fait que :
la couche intermédiaire (18) est constituée d'un stratifié composé d'une couche d'âme en polymère résistant aux chocs, tel que du PET, et deux couches
de colle thermoplastiques, en polyvinylbutyral ou en polyuréthane,
disposées sur les deux faces de la couche d'âme en polymére résistant aux chocs

2. Dispositif de protection en cas de choc latéral suivant la revendication 1 **caractérisé en ce que** a couche intermédiaire (18) est en une matière plastique ayant un module d'Young au moins égal à 20 MPa, l'adhésion entre verre et matiére plastique étant telle que la résistance à l'arrachement est au moins de 20 N/cm pour une bande de 1, cm de large, un promoteur d'adhérer étant si nécessaire déposé sur le verre ou introduit dans la matière plastique pour atteindre la valeur voulue.

3. Dispositif de protection en cas de choc latéral suivant la revendication 1 dans le cas où la couche (18) est un stratifié, **caractérisé en ce que** la ou les feuilles de verre (16, 17) partiellement trempées présentent chacune une épaisseur de 1,5 à 2,5 mm et des précontraintes de pression dans les couches superficielles de 25 à 100 MN/m².

4. Dispositif de protection en cas de choc latéral suivant la revendication 1 dans le cas où la couche (18) est en une matière plastique ayant un module d'Young au moins égal à 20 MPa, **caractérisé en ce que** le vitrage (15) a une épaisseur totale inférieure à 15 mm, un rapport de l'épalsseur de la couche (18) à l'épaisseur de chaque feuille de verre (16, 17) compris entre 1 et 10 et un module d'Young supérieur à 30 GPa pour une épaisseur totale de vitrage de 3 mm.

5. Dispositif de protection en cas de choc latéral suivant la revendication 1 dans le cas où la couche (18) est en une matière plastique ayant un module d'Young au moins égal à 20 MPa ou suivant la revendication 3, **caractérisé en ce que** ladite matière plastique comprend pour une proportion prépondérante au moins l'une des constituants choisis parmi une résine ionomère, telle qu'un copolymère d'éthylène et d'acide (méth)acrylique neutralisé par une polyamine, un polyuréthane, un polyuréthane thermoplastique, un poly(téréphtalate d'éthylène), un polyester ou une résine acrylique éventuellement modifiée.

6. Dispositif de protection en cas de choc latéral suivant la revendication 1 dans le cas où la couche (18) est en une matière plastique ayant un module d'Young au moins égal à 20 MPa ou suivant la revendication 3 ou 4, **caractérisé en ce que** chaque feuille de verre (16, 17) a une épaisseur comprise entre 0,5 et 1,5 mm et la couche (18) une épaisseur comprise entre 2 et 10 mm.

## Claims

1. Device for protection of the occupants of a vehicle in the event of a side impact, which includes an airbag (9) placed in the side wall of the vehicle, alongside a window in such a way that, in the activated state, it deploys in the direction extending between the occupant's head and the surface of the window having a side glazing, **characterized in that** the pane (15) is a compound glass pane which includes at least two glass sheets (16, 17), one of which at least being partially toughened by quick cooling, and at least one intermediate layer (18), and **in that** the compound glass pane (15) has an increased flexural strength because of the fact that the intermediate layer 18 consists of a laminate composed of a core layer of an impact-resistant polymer, such as PET, and of two thermoplastic adhesive layers, of polyvinylbutyral or of polyurethane, which are placed on both sides of the core layer of an impact-resistant polymer.

2. Device for protection in the event of a side impact according to claim 1, **characterized in that** the intermediate layer 18 is made of a plastic having a Young's modulus at least equal to 20 MPa, the adhesion between glass and plastic being such that the tear strength is at least 20 N/cm for a strip 1 cm in width, if necessary an adhesion promoter being deposited on the glass or introduced into the plastic in order to achieve the desired value.

3. Device for protection in the event of a side impact according to Claim 1, **characterized in that** if the layer (18) is a laminate, the partially toughened glass sheet or sheets (16, 17) each have a thickness of from 1.5 to 2.5 mm and compressive prestresses in the surface layers of from 25 to 100 MN/m².

4. Device for protection in the event of a side impact according to Claim 1, **characterized in that** if the layer (18) is made of a plastic having a Young's modulus at least equal to 20 MPa, the glass pane (15) has a total thickness of less than 15 mm, a ratio of the thickness of the layer (18) to the thickness of each glass sheet (16, 17) of between 1 and 10, and a Young's modulus greater than 30 GPa for a total glazing thickness of 3 mm.

5. Device for protection in the event of a side impact according to Claim 1 if the layer (18) is made of a plastic having a Young's modulus at least equal to 20 MPa, or according to claim 3, **characterized in that** the said plastic comprises, as a major proportion, at least one of the constituents chosen from an ionomer resin, such as a copolymer of ethylene and of (meth)acrylic acid neutralized by a polyamine, a polyurethane, a thermoplastic polyurethane, a poly(ethylene terephthalate), a polyester or an acrylic resin, optionally modified.

6. Device for protection in the event of a side impact according to Claim 1 if the layer (18) is made of a plastic having a Young's modulus at least equal to 20 MPa, or according to claim 3 or 4, **characterized in that** each glass sheet (16, 17) has a thickness of between 0.5 and 1.5 mm and the layer (18) has a thickness of between 2 and 10 mm.

## Patentansprüche

1. Vorrichtung zum Schutz von Fahrzeuginsassen bei einem Seitenaufprall, die einen Airbag (9) umfasst, der in der Seitenwand des Fahrzeugs neben einem Fenster derart angeordnet ist, dass er sich im aktiven Zustand in die Richtung entfaltet, die zwischen dem Kopf des Fahrzeuginsassen und der Oberfläche des Fensters, das eine Seitenscheibe enthält, verläuft, **dadurch gekennzeichnet, dass** die Seitenscheibe (15) eine Verbundglasscheibe ist, die mindestens zwei Glasscheiben (16, 17), wovon wenigstens eine durch schnelles Abkühlen teilweise vorgespannt ist, und eine Zwischenschicht (18) umfasst, **und dass** die Verbundglasscheibe (15) **dadurch** eine erhöhte Biegespannung beim Bruch aufweist, dass die Zwischenschicht (18) von einem Schichtmaterial gebildet wird, das sich aus einer Kernschicht aus einem schlagfesten Polymer wie PET und zwei thermoplastischen Haftschichten aus Polyvinylbutyral oder Polyurethan, die auf den zwei Seiten der Kernschicht aus schlagfestem Polymer angeordnet sind, zusammensetzt.

2. Vorrichtung zum Schutz bei einem Seitenaufprall nach Anspruch 1, **dadurch gekennzeichnet, dass** die Zwischenschicht (18) aus einem Kunststoff mit einem Elastizitätsmodul von mindestens 20 MPa besteht, wobei die Haftung zwischen Glas und Kunststoff derart ist, dass die Ablösefestigkeit mindestens 20 N/cm für ein 1 cm breites Band beträgt, und erforderlichenfalls ein Haftungsverstärker auf dem Glas aufgebracht oder in den Kunststoff eingebaut ist, um den gewünschten Wert zu erreichen.

3. Vorrichtung zum Schutz bei einem Seitenaufprall nach Anspruch 1, wobei die Schicht (18) aus einem Schichtmaterial besteht, **dadurch gekennzeichnet, dass** die teilweise vorgespannte/n Glasscheibe/n (16, 17) jeweils eine Dicke von 1,5 bis 2,5 mm und Druckvorspannungen in den Oberflächenschichten von 25 bis 100 MN/m² aufweist/aufweisen.

4. Vorrichtung zum Schutz bei einem Seitenaufprall nach Anspruch 1, wobei die Schicht (18) aus einem Kunststoff mit einem Elastizitätsmodul von mindestens 20 MPa besteht, **dadurch gekennzeichnet, dass** die Seitenscheibe (15) eine Gesamtdicke von unter 15 mm, ein Verhältnis von Dicke der Schicht (18) zu Dicke einer jeden Glasscheibe (16, 17) von 1 bis 10 und ein Elastizitätsmodul von über 30 GPa bei einer Gesamtdicke der Verglasung von 3 mm besitzt.

5. Vorrichtung zum Schutz bei einem Seitenaufprall nach Anspruch 1, wobei die Schicht (18) aus einem Kunststoff mit einem Elastizitätsmodul von mindestens 20 MPa besteht, oder nach Anspruch 3, **dadurch gekennzeichnet, dass** der Kunststoff für einen überwiegenden Anteil mindestens einen der Bestandteile umfasst, die aus einem Ionomerharz wie einem Ethylen-(Meth)acrylsäure-Copolymer, das mit einem Polyamin neutralisiert ist, einem Polyurethan, einem thermoplastischen Polyurethan, einem Polyethylentherephthalat, einem Polyester oder einem gegebenenfalls modifizierten Acrylharz ausgewählt sind.

6. Vorrichtung zum Schutz bei einem Seitenaufprall nach Anspruch 1, wobei die Schicht (18) aus einem Kunststoff mit einem Elastizitätsmodul von mindestens 20 MPa besteht, oder nach Anspruch 3 oder 4, **dadurch gekennzeichnet, dass** jede Glasscheibe (16, 17) eine Dicke von 0,5 bis 1,5 mm und die Schicht (18) eine Dicke von 2 bis 10 mm besitzt.
